# EUROPEAN PATENT APPLICATION

(11) **EP 3 742 311 A1**
(43) Date of publication of application: **25.11.2020**
(21) Application number: 18901534.0
(22) Date of filing: 19.01.2018
(51) Int. Cl.: G06F 17/28

(54) **SERVER CONTROL METHOD, SERVER, AND SERVER CONTROL PROGRAM**

(71) Applicant: Gurunavi, Inc., Tokyo 100-0006 (JP)
(72) Inventor: OHISA, Satoshi, Tokyo 100-0006 (JP)
(74) Representative: D Young & Co LLP
(86) International application number: PCT/JP2018/001656
(87) International publication number: WO 2019/142334

(57) **Abstract**

A server connectable to a memory unit that stores a first master that associates an expression in a first language with an expression in a second language of a plurality of terms belonging to each category for each of a plurality of categories and a second master that associates a plurality of terms belonging to a key category with a template that defines an arrangement order of the terms in a case where the name including each term is expressed in the second language, and a terminal is controlled so as to transmitting selection data for allowing a user of the terminal to select the terms in the first language to the terminal, receiving the selected terms from the terminal, specifying the template associated with the selected terms belonging to the key category, arranging expressions in the second language of the selected terms in an arrangement order defined by the specified template to generate an expression in the second language of the name including the selected terms, and transmitting the expression in the second language of the generated name to the terminal.

## Description

### BACKGROUND OF THE INVENTION

### 1. Field of the Invention

The present disclosure relates to a control method of a server connectable to a memory unit and a user terminal, the server, and a control program of the server.

### 2. Description of Related Art

A restaurant is required to provide a menu of its own store in a foreign language for a foreign traveler who collects restaurant information on the network. Therefore, a menu generation system capable of easily generating a menu name in the foreign language is used.

For example, PTL 1 discloses that a genre, a food material, and a seasoning are selected to designate a menu and a foreign language name corresponding to the designated genre, food material, and seasoning is combined to provide a menu attribute expressed in the foreign language.

Further, PTL 2 discloses that an input of elements such as a food material, a cooking method, and a flavoring for a predetermined dish is accepted, a menu in a basic language is created based on grammar of the basic language, the menu is converted from the basic language to a representation format in another language by element unit, and a menu in the other language is created based on grammar of the other language.

### Citation List

### Patent Literature

PTL 1: Japanese Unexamined Patent Application Publication No. 2017-182355
PTL 2: Japanese Unexamined Patent Application Publication No. 2015-194857

### SUMMARY OF THE INVENTION

A dish menu is changed on a daily basis corresponding to diversification in preference of a customer. Thus, it is important to provide the foreign language name corresponding to a new menu in order to enhance a service for the foreign traveler.

With the menu generation system according to PTL 1, it is possible to express descriptions corresponding to the cooking method, the food material, and the seasoning in the foreign language to display the attributes of the menu. However, there is a case where a display order of each attribute differs from a common display order in a case where the display order of each attribute is fixed, and thus the foreigner may feel uncomfortable.

With an information processing apparatus according to PTL 2, the menu of each language is created for the elements such as the food material, the cooking method, and the flavoring based on the grammar of each language. However, PTL 2 does not specifically disclose an arrangement order of each element based on the grammar, and thus a menu not communicating to the foreigner may be created.

A purpose of the present disclosure is to provide a control method of a server capable of generating a foreign language name in an appropriate word order, the server, and a control program of the server.

A control method of a server according to the present disclosure is a control method of a server connectable to a memory unit and a terminal. The memory unit stores a first master that associates an expression in a first language with an expression in a second language of each of a plurality of terms belonging to each category for each of a plurality of categories, and a second master that associates a plurality of terms belonging to a key category among the plurality of categories with a template that defines an arrangement order of the terms respectively belonging to each of the categories included in a name including each term in a case where the name is expressed in the second language. The server transmits selection data for allowing a user of the terminal to select the terms belonging to the key category included in the name and the terms belonging to the categories other than the key category in the first language to the terminal, receives the selected terms belonging to the key category and the terms belonging to the categories other than the key category from the terminal, specifies the template associated with the selected terms belonging to the key category in the second master, arranges expressions in the second language of the selected terms to be acquired from the first master in an arrangement order defined by the specified template to generate an expression in the second language of the name, and transmits the expression in the second language of the generated name to the terminal.

Further, in the control method of the server according to the present disclosure, it is preferable that the first master further associates the expression in the first language with an expression in a third language of each of the plurality of terms belonging to each of the categories, and the second master further associates each of the plurality of terms belonging to the key category with the template in the third language.

Further, in the control method of the server according to the present disclosure, it is preferable that the expression in the second language of the generated name is newly stored in the first master as the term belonging to any one of the categories according to an instruction of the user.

Further, in the control method of the server according to the present disclosure, it is preferable that the memory unit further stores a third master that associates each of the terms belonging to the categories other than the key category among the plurality of categories with a sub-template that defines an arrangement order of the terms respectively belonging to each of the categories included in a part name in a case where the part name including each of the terms is expressed in the second language, and the server specifies the sub-template associated with the selected terms belonging to the categories other than the key category in the third master in the specification and arranges expressions in the second language of terms defined by the sub-template among the selected terms in the arrangement order defined by the specified sub-template.

Further, in the control method of the server according to the present disclosure, it is preferable that an upper-level term is associated with the specified term in the second master, and in a case where the template is not associated with the selected terms in the specification, the template associated with the upper-level terms associated with the selected terms is specified as the template associated with the selected terms.

Further, in the control method of the server according to the present disclosure, it is preferable that a term belonging to another category selectable together with each of the terms for each of the terms is associated in the first master or the second master, and the server prohibits selection of a term other than the term selectable together with the selected terms in the selection data.

Further, in the control method of the server according to the present disclosure, it is preferable that the key category is a cooking method and the category other than the key category is a food material or a seasoning.

A server according to the present disclosure is a server connectable to a memory unit and a terminal. The memory unit stores a first master that associates an expression in a first language with an expression in a second language of each of a plurality of terms belonging to each category for each of a plurality of categories, and a second master that associates a plurality of terms belonging to a key category among the plurality of categories with a template that defines an arrangement order of the terms respectively belonging to each of the categories included in a name including each term in a case where the name is expressed in the second language. The server includes a selection data transmission unit that transmits selection data for allowing a user of the terminal to select the terms belonging to the key category and the terms belonging to the categories other than the key category in the first language to the terminal, a receiving unit that receives the selected terms belonging to the key category and the terms belonging to the categories other than the key category from the terminal, a template specification unit that specifies the template associated with the selected terms belonging to the key category in the second master, an expression generation unit that arranges expressions in the second language of the selected terms to be acquired from the first master in an arrangement order defined by the specified template to generate an expression in the second language of the name including the selected terms, and an expression transmission unit that transmits the expression in the second language of the generated name to the terminal.

A control program of a server according to the present disclosure is a control program of a server connectable to a memory unit and a terminal. The memory unit stores a first master that associates an expression in a first language with an expression in a second language of each of a plurality of terms belonging to each category for each of a plurality of categories, and a second master that associates a plurality of terms belonging to a key category among the plurality of categories with a template that defines an arrangement order of the terms respectively belonging to each of the categories included in a name including each term in a case where the name is expressed in the second language. The program causing the server to transmit selection data for allowing a user of the terminal to select the terms belonging to the key category and the terms belonging to the categories other than the key category in the first language to the terminal, receive the selected terms belonging to the key category and the terms belonging to the categories other than the key category from the terminal, specify the template associated with the selected terms belonging to the key category in the second master, arrange expressions in the second language of the selected terms to be acquired from the first master in an arrangement order defined by the specified template to generate an expression in the second language of the name including the selected terms, and transmit the expression in the second language of the generated name to the terminal.

With the control method of the server, the server, and the control program of the server according to the present disclosure, it is possible to generate the foreign language name in an appropriate word order.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic diagram showing an outline of an operation of an information providing system 1;
FIG. 2 is a schematic diagram showing a schematic configuration of the information providing system 1;
FIG. 3 is a schematic diagram showing a schematic configuration of a server 2;
FIG. 4 is a schematic diagram showing a schematic configuration of a storage apparatus 3;
FIG. 5 is a diagram showing an example of a first master corresponding to a cooking method;
FIG. 6 is a diagram showing an example of a first master corresponding to a food material;
FIG. 7 is a diagram showing an example of a first master corresponding to a food material modifier;
FIG. 8 is a diagram showing an example of a second master corresponding to the cooking method;
FIG. 9 is a diagram showing an example of a third master corresponding to the food material;
FIG. 10 is a schematic diagram showing a schematic configuration of a terminal 4;
FIG. 11 is a diagram showing an example of a term input screen;
FIG. 12 (a) is a diagram showing an example of a term selection list corresponding to the cooking method, and FIG. 12 (b) is a diagram showing an example of a term selection list corresponding to the food material;
FIG. 13 (a) is a diagram showing an example of a food material modifier input screen, and FIG. 13 (b) is a diagram showing an example of a food material modifier selection list corresponding to a production area;
FIG. 14 is a diagram showing an example of the term input screen after a term selection;
FIG. 15 is a diagram showing an example of a generated term display screen.
FIG. 16 is an operation sequence diagram of the information providing system 1;
FIG. 17 is a flowchart of second language expression generation processing;
FIG. 18 is a flowchart of modifier addition processing; and
FIG. 19 is a flowchart of second language expression registration processing.

### DETAILED DESCRIPTION OF EMBODIMENTS

Hereinafter, a control method of a server, the server, and a control program of the server will be described in detail with reference to drawings. However, the present disclosure is not limited to the drawings or an embodiment described below.

An information providing system including the server according to the present disclosure generates a foreign language menu corresponding to a name including a term selected by a restaurant-related person such as an owner or an employee of the restaurant.

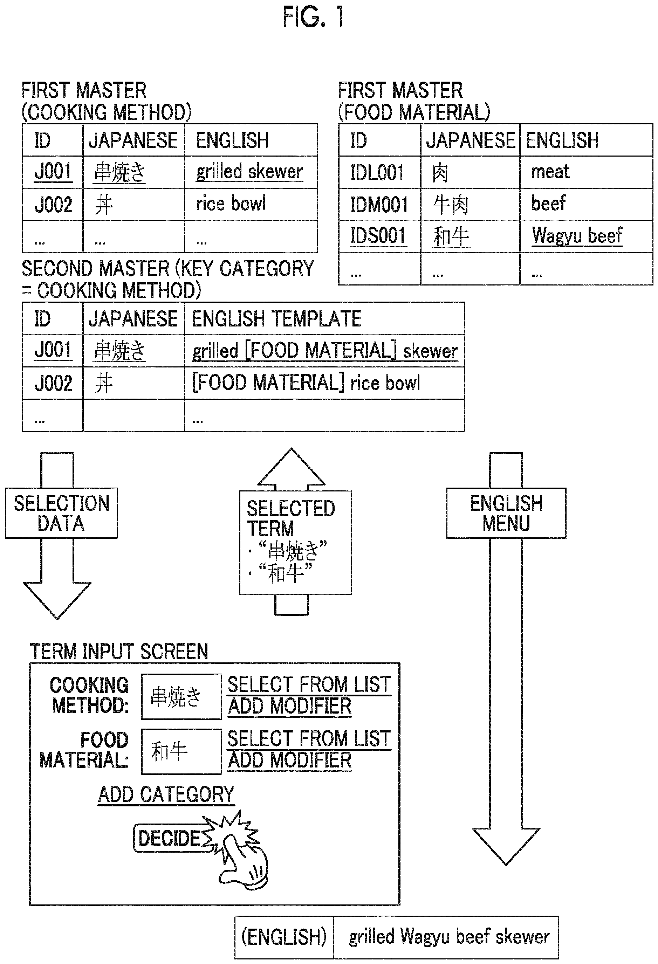

FIG. 1 is a schematic diagram showing an outline of an operation of the information providing system.

An information providing system 1 stores first masters corresponding to a cooking method and a food material. In the present disclosure, a master is a data group, a table, or a database that collects and manages data used for processing in the information providing system 1. The data in the master may be managed by a relational data base management system (RDBMS) or by a single file.

The first master corresponding to the cooking method stores terms belonging to a category of the cooking method in association with expressions in each national language. The first master corresponding to the food material stores terms belonging to a category of the cooking method in association with expressions in each national language.

The information providing system 1 stores a second master corresponding to the cooking method. The second master stores the terms belonging to the category of the cooking method and templates in association with each other. The template is information that defines an arrangement order of the terms in a case where a menu including the terms belonging to the category of the cooking method is expressed.

In the example of FIG. 1, a template "grilled [food material] skewer" associated with a term " 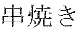 " indicates that in a case where the term " 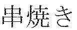 " belonging to the category "cooking method" is selected together with a term belonging to the category "food material", an expression in English of the term belonging to the category "food material" is required to be disposed at a position of the "[food material]".

The category associated with the template in the second master like the category "the cooking method" in the example of FIG. 1 is referred to as "key category".

The information providing system 1 accepts designation of the terms included in a menu to be translated by selection data. The selection data is data for displaying a screen for allowing a user to select the terms included in the menu in a first language on a terminal used by the user. The user selects the terms included in the menu to be translated using a term input screen to be displayed by the selection data. In the example of FIG. 1, Japanese terms " 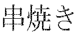 " and " 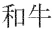 " are selected as the term.

The information providing system 1 specifies the template from the second master based on the term belonging to the key category among the selected terms. The information providing system 1 arranges the expressions in a second language of the selected terms in the arrangement order defined by the specified template to generate a second language menu and to provide the generated menu to the user. In the example of FIG. 1, "grilled Wagyu beef skewer" is generated as an English menu.

Accordingly, the information providing system 1 can generate the name in the foreign language in an appropriate word order.

Hereinafter, an example will be described in which the first language is Japanese, the second language is English, and a third language is Chinese (Simplified Chinese), but the first language, the second language, and the third language may be other languages.

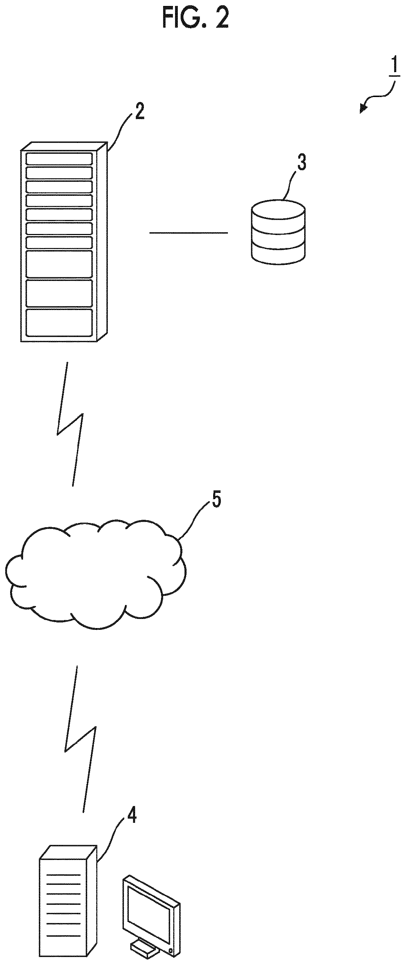

FIG. 2 is a schematic diagram showing a schematic configuration of the information providing system 1.

In the information providing system 1, the server 2 is connected to a storage apparatus 3 and is connected to a terminal 4 through a network 5.

The network 5 connects a server 2 and the terminal 4 in a communicable manner. The network 5 is, for example, the Internet on which communication is performed by transport control protocol/Internet protocol (TCP/IP), and apparatuses communicating through the network 5 are connected by wired or wireless connection. The wireless connection may be a wireless local area network (LAN) connection such as the institute of electrical and electronics engineers (IEEE) 802.11ac or a wireless wide area network (WAN) connection such as a 4th generation (4G) line.

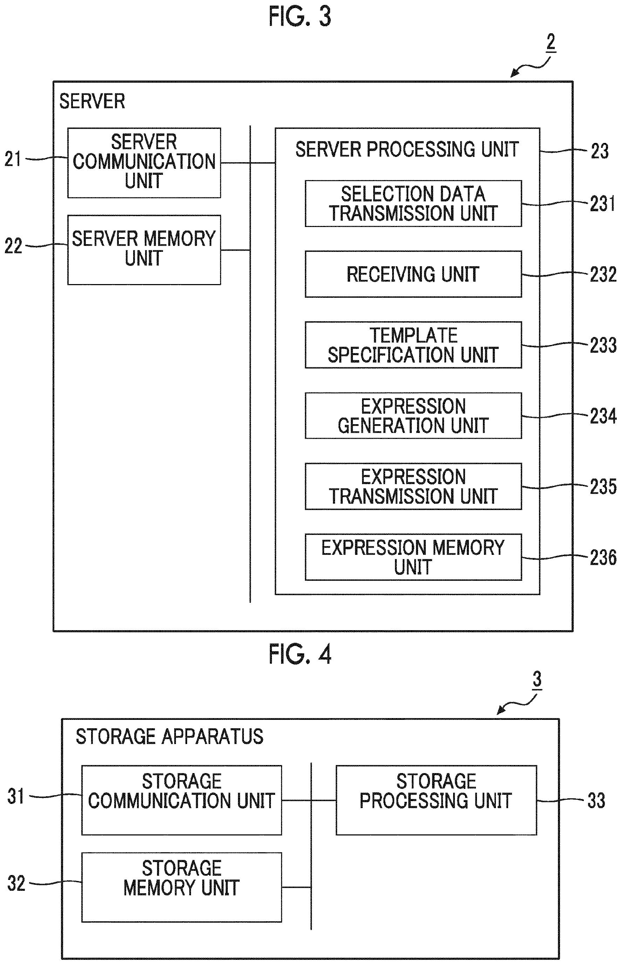

FIG. 3 is a schematic diagram showing a schematic configuration of the server 2.

The server 2 is connected to the storage apparatus 3 and the terminal 4 and generates the expression in the second language of the name. For this purpose, the server 2 includes a server communication unit 21, a server memory unit 22, and a server processing unit 23.

The server communication unit 21 has a communication interface circuit for connecting the server 2 to the network 5. The server communication unit 21 supplies data received from the terminal 4 to the server processing unit 23. Further, the server communication unit 21 transmits the data supplied from the server processing unit 23 to the terminal 4 and the like.

The server memory unit 22 has at least one of, for example, a semiconductor memory, a magnetic disk apparatus, or an optical disk apparatus. The server memory unit 22 stores a driver program, an operating system program, an application program, the data, and the like used for the processing by the server processing unit 23. For example, the server memory unit 22 stores a communication device driver program and the like that control the server communication unit 21 as the driver program. Various programs may be installed from a computer readable portable recording medium such as a compact disc read-only memory (CD-ROM) or a DVD read-only memory (DVD-ROM) to the server memory unit 22 using a known setup program or the like.

The server processing unit 23 includes one or more processors and peripheral circuits of the processors. The server processing unit 23 integrally controls the overall operation of the server 2 and is, for example, a central processing unit (CPU). The server processing unit 23 controls the operations of the server communication unit 21 and the like such that various pieces of processing of the server 2 are executed by an appropriate means based on the programs and the like stored in the server memory unit 22. The server processing unit 23 executes the pieces of processing based on the programs (operating system program, driver program, application program, and the like) stored in the server memory unit 22. Further, the server processing unit 23 can execute a plurality of programs (application program and the like) in parallel.

The server processing unit 23 has a selection data transmission unit 231, a receiving unit 232, a template specification unit 233, an expression generation unit 234, an expression transmission unit 235, and an expression memory unit 236. Each of the units included in the server processing unit 23 is a functional module realized by the program executed on the processor included in the server processing unit 23. Alternatively, each of the units included in the server processing unit 23 may be mounted on the server 2 as an independent integrated circuit, the processor, or a firmware.

FIG. 4 is a schematic diagram showing a schematic configuration of the storage apparatus 3.

The storage apparatus 3 is an example of the memory unit in the present disclosure. The storage apparatus 3 stores input data and outputs the stored data in response to a request. For this purpose, the storage apparatus 3 includes a storage communication unit 31, a storage memory unit 32, and a storage processing unit 33.

The storage communication unit 31 has the communication interface circuit for connecting the storage apparatus 3 to the server 2. The storage communication unit 31 supplies data received from the server 2 to the storage processing unit 33. Further, the storage communication unit 31 transmits the data supplied from the storage processing unit 33 to the server 2.

The storage memory unit 32 has at least one of, for example, the semiconductor memory, the magnetic disk apparatus, or the optical disk apparatus. The storage memory unit 32 stores the data received from the server 2 and the like.

The storage processing unit 33 includes one or more processors and peripheral circuits of the processors. The storage processing unit 33 integrally controls the overall operation of the storage apparatus 3 and is, for example, the central processing unit (CPU). The storage processing unit 33 controls the operations of the storage communication unit 31 and the storage memory unit 32.

The storage apparatus 3 may not have the storage communication unit 31 and the storage processing unit 33. In this case, the storage memory unit 32 of the storage apparatus 3 is directly connected to the server 2, and the storage memory unit 32 is controlled by the server processing unit 23 of the server 2.

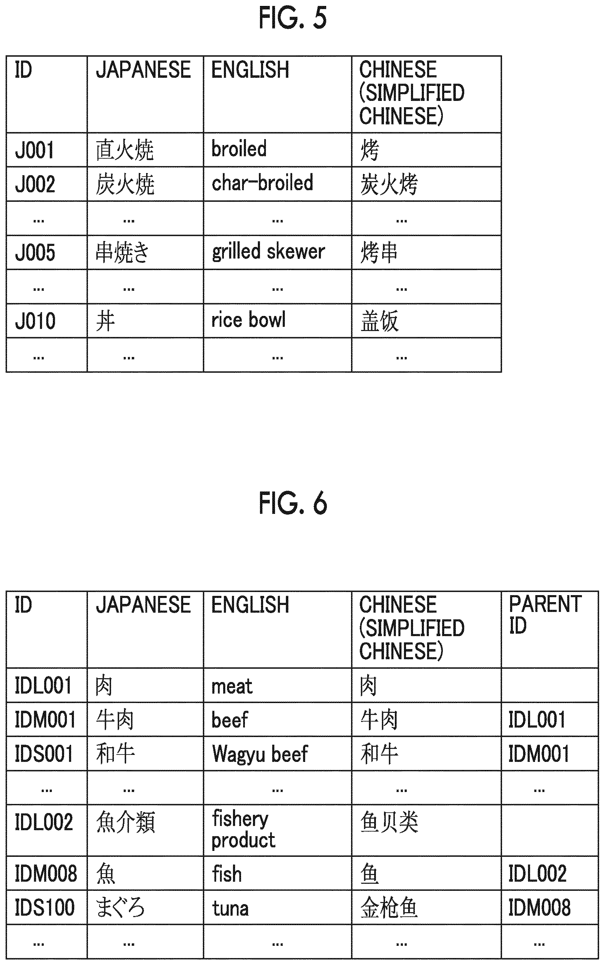

The storage apparatus 3 stores a plurality of terms included in the name in the first master to a third master exemplified in FIGS. 5 to 9 for each category which is an attribute common to each of the terms and provides the terms to the server 2. In the embodiment, the name to be processed is a menu name, and the category is "cooking method", "food material", "production area", "portion", and "rank". The categories of the terms included in the menu name of a dish may include "seasoning", "topping", "flavoring", "shape", and the like in addition to the above. Further, the name is not limited to the menu name. In a case where a name other than the menu name of the dish is the processing target, the categories of the terms included in the name differs from the example in the embodiment.

FIG. 5 is a diagram showing an example of the first master corresponding to the cooking method.

The first master corresponding to the cooking method stores the expressions respectively in the first language, the second language, and the third language of the terms belonging to the cooking method in association with identifiers. Specifically, the first master corresponding to the cooking method stores Japanese terms " 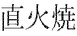 ", " 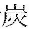 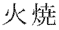 ", " 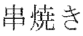 ", and " 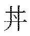 " belonging to the category "cooking method" and the expressions corresponding to these Japanese terms in English and Chinese (Simplified Chinese) in association with each of the identifiers.

FIG. 6 is a diagram showing an example of the first master corresponding to the food material.

The first master corresponding to the food material stores the expressions respectively in the first language, the second language, and the third language of the terms belonging to the food material and parent IDs in association with identifiers. Specifically, the first master corresponding to the food material stores Japanese terms " 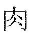 ", " 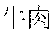 ", " 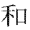 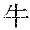 ", " 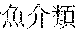 ", " 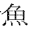 ,", and " 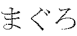 " belonging to the category "food material" and the expressions corresponding to these Japanese terms in English and Chinese (Simplified Chinese) in association with each of the identifiers.

The parent ID is an ID of a term corresponding to an upper-level term which is a term representing superordinate concept of an associated term. A parent ID "IDM001" of a food material " 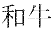 " indicates that " 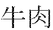 " associated with ID "IDM001" is the upper-level term of " 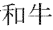 ".

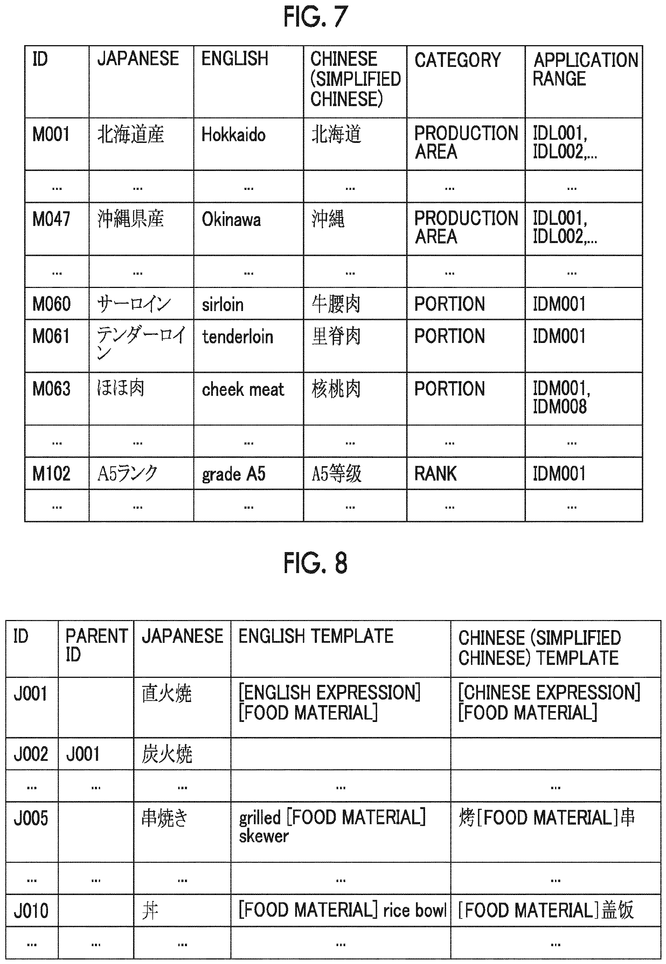

FIG. 7 is a diagram showing an example of a first master corresponding to a food material modifier.

The first master corresponding to the food material modifier stores the expressions respectively in the first language, the second language, and the third language of the terms modifying the food material, the categories, and application ranges in association with identifiers. The category indicates a category to which each term stored in the first master corresponding to the food material modifier belongs. The application range indicates an ID of a term belonging to another category that can be selected together with each term.

The first master corresponding to the food material modifier stores Japanese terms " 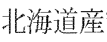 " and " 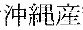 " as the food material modifier belonging to the category "production area", the expressions corresponding to these Japanese terms in English and Chinese (Simplified Chinese), an attribute "production area", and the application range in association with each of the identifiers. The application ranges "IDL001, IDL002, ..." of the term " 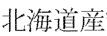 " indicate that the term " 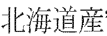 " can be selected together with the terms " 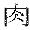 ", " 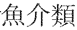 ", and the like.

Further, the first master corresponding to the food material modifier stores Japanese terms " 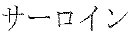 ", " 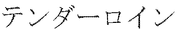 ", and " 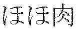 " as the food material modifier belonging to the category "portion", the expressions corresponding to these Japanese terms in English and Chinese (Simplified Chinese), an attribute "portion", and the application range in association with each of the identifiers.

Further, the first master corresponding to the food material modifier stores a Japanese term "A 5 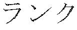 " as the food material modifier belonging to the category "rank", the expression corresponding to this Japanese term in English and Chinese (Simplified Chinese), an attribute "rank", and the application range in association with the identifier.

The first master corresponding to the food material modifier stores the term belonging to each category for a plurality of categories "production area", "portion", and "rank". In this manner, the term belonging to each of the categories for the plurality of categories may be stored in a single first master.

FIG. 8 is a diagram showing an example of the second master corresponding to the cooking method.

The second master corresponding to the cooking method stores the parent ID, the terms belonging to the cooking method and templates for English which is the second language and for Chinese (Simplified Chinese) which is the third language in association with identifiers. The "cooking method" which is the category to be stored in association with the templates in this manner is the key category. In a case where the name including each term is expressed in English and Chinese (Simplified Chinese), the template defines the arrangement order of each term that respectively belongs to each category included in the name.

In FIG. 8, a parent ID "J001" of a cooking method " 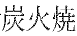 " indicates that " 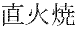 " associated with ID "J001" is the upper-level term of " 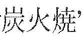 ". In this manner, a specific term is associated with an upper-level term in the second master.

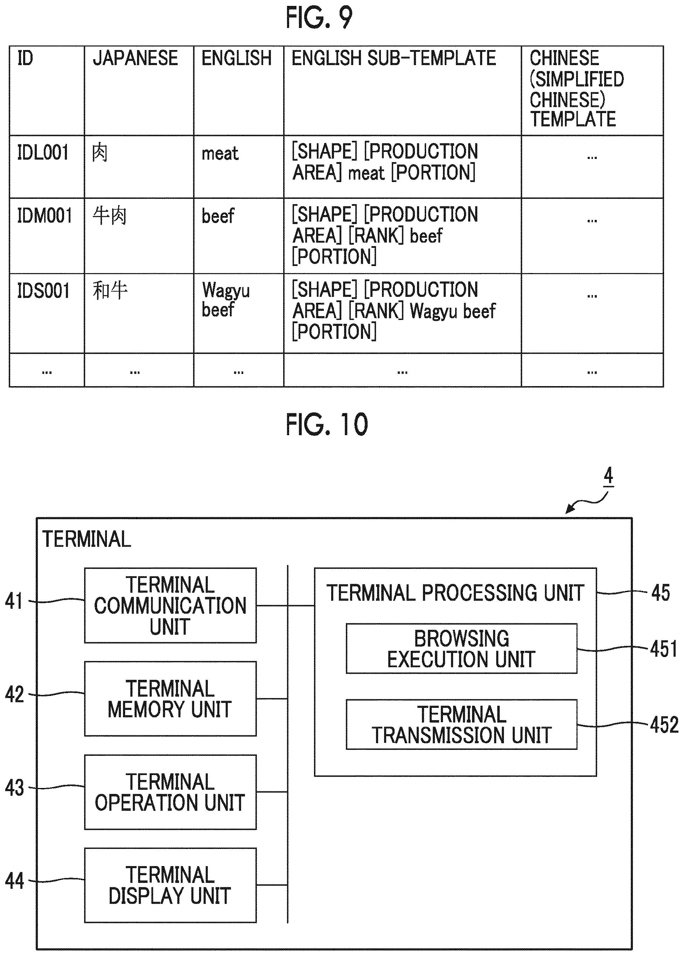

FIG. 9 is a diagram showing an example of a third master corresponding to the food material.

The third master corresponding to the food material stores the terms belonging to the food material, the expressions in English which is the second language, an English sub-template, and a Chinese (Simplified Chinese) sub-template in association with identifiers. In a case where a part name including each term is expressed in English, the English sub-template defines the arrangement order of each term that respectively belongs to each category included in the part name. The sub-template is associated with the terms belonging to the categories other than the key category. A description is omitted in FIG. 9, but similarly to the English sub-template, in a case where a part name including each term is expressed in Chinese (Simplified Chinese), the Chinese (Simplified Chinese) sub-template also defines the arrangement order of each term that respectively belongs to each category included in the part name.

The storage apparatus 3 in the embodiment stores the respectively single first master to third master commonly used by the entire information providing system 1. The storage apparatus 3 may store the first master to the third master to be used for each terminal 4 or for each user of the terminal 4. Further, the storage apparatus 3 may store some information of the first master to the third master in common in the entire information providing system 1 and may store other pieces of information of the first master to the third master for each terminal 4 or for each user of the terminal 4.

FIG. 10 is a schematic diagram showing a schematic configuration of the terminal 4.

The terminal 4 is connected to the server 2 through the network 5 and communicates with the server 2. The terminal 4 accepts the input such as selection of the term included in the name in response to an input operation by the user. For this purpose, the terminal 4 includes a terminal communication unit 41, a terminal memory unit 42, a terminal operation unit 43, a terminal display unit 44, and a terminal processing unit 45.

A personal computer (PC) is assumed as the terminal 4 in the embodiment, but the embodiment is not limited thereto. The terminal 4 may be an information processing apparatus such as a multi-functional portable telephone (so-called "smartphone"), a portable telephone (so-called "feature phone"), a portable information terminal (personal digital assistant, PDA), a portable game machine, a portable music player, a tablet terminal, a tablet PC, or a notebook PC. Further, the terminal 4 may be a menu terminal or the like that is installed in a restaurant and operated by a restaurant-related person or the like.

The terminal communication unit 41 includes the communication interface circuit and connects the terminal 4 to the network 5. The terminal communication unit 41 transmits data supplied from the terminal processing unit 45 to the server 2 and the like through the network. Further, the terminal communication unit 41 supplies the data received from the server 2 and the like to the terminal processing unit 45 through the network.

The terminal memory unit 42 includes, for example, a semiconductor memory apparatus. The terminal memory unit 42 stores the operating system program, the driver program, the application program, the data, and the like used for the processing by the terminal processing unit 45. For example, the terminal memory unit 42 stores an input device driver program that controls the terminal operation unit 43, an output device driver program that controls the terminal display unit 44, and the like as the driver program. Further, the terminal memory unit 42 stores a screen display program for displaying the term input screen for the user to select the term included in the name with respect to the terminal operation unit 43 as the application program. Further, the terminal memory unit 42 may temporarily store temporary data related to predetermined processing.

The terminal operation unit 43 may be any device as long as the operation of the terminal 4 is possible and is, for example, a touch panel, a key button, or the like. The user can input a character, a number, a symbol, and the like by using the terminal operation unit 43. In a case where the terminal operation unit 43 is operated by the user, the terminal operation unit 43 generates a signal corresponding to the operation. The generated signal is supplied to the terminal processing unit 45 as an instruction of the user.

The terminal display unit 44 may be any device as long as displays of a video, an image, and the like are possible and is, for example, a liquid crystal display, an organic electro-luminescence (EL) device, or the like. The terminal display unit 44 displays a video corresponding to video data supplied from the terminal processing unit 45, an image corresponding to image data, and the like.

The terminal processing unit 45 includes one or more processors and peripheral circuits of the processors. The terminal processing unit 45 integrally controls the overall operation of the terminal 4 and is, for example, the central processing unit (CPU). The terminal processing unit 45 controls the operations of the terminal communication unit 41, the terminal display unit 44, and the like such that various pieces of processing of the terminal 4 are executed by an appropriate means based on the programs stored in the terminal memory unit 42 and the operation on the terminal operation unit 43. The terminal processing unit 45 executes the pieces of processing based on the programs (operating system program, driver program, application program, and the like) stored in the terminal memory unit 42. Further, the terminal processing unit 45 can execute the plurality of programs (application program and the like) in parallel.

The terminal processing unit 45 includes at least a browsing execution unit 451, a terminal transmission unit 452, and the like. Each of the units is the functional module realized by the program executed by the processor included in the terminal processing unit 45. Alternatively, each of the units may be mounted on the terminal 4 as the firmware.

Since the information providing system 1 of the present disclosure employs the hardware configuration described above to provide the translation of the name combining the plurality of terms in an appropriate word order by the server, it is possible to reduce a processing time of the server and thus to perform efficient information processing.

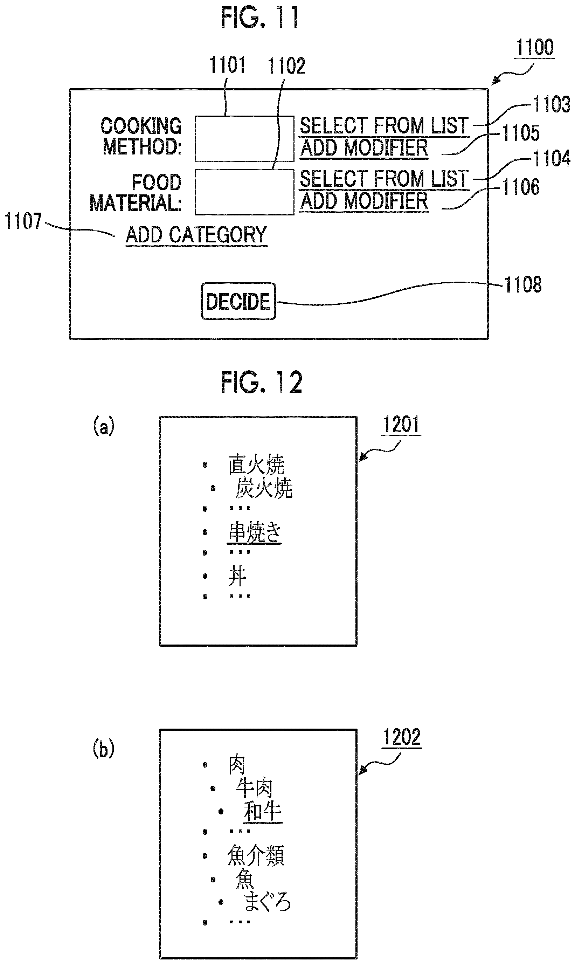

An example of each display screen to be displayed on the terminal display unit 44 by a display function of the terminal 4 connected to the server 2 will be described with reference to FIGS. 11 to 15.

FIG. 11 is a diagram showing an example of the term input screen.

The terminal 4 displays a term input screen 1100 shown in FIG. 11 on the terminal display unit 44 based on the selection data transmitted by the server 2. The selection data is data for the user of the terminal to select the term belonging to the key category and the term belonging to the category other than the key category in the first language. The user of the terminal 4 selects the term included in the name of the dish to be translated for each category with reference to the term input screen 1100.

The term input screen 1100 includes a cooking method input box 1101, a food material input box 1102, a cooking method list display link 1103, a food material list display link 1104, a cooking method modifier addition screen display link 1105, a food material modifier addition screen display link 1106, a category addition link 1107, and an input content deciding button 1108.

The cooking method input box 1101 is a region for inputting the term belonging to the category "cooking method" among the terms included in the name of the dish.

The food material input box 1102 is the same as the cooking method input box 1101 except that the category of the target term is "food material".

The cooking method list display link 1103 is a link for displaying a list of the terms belonging to the category "cooking method" and is displayed in a form of hyperlink in hypertext. The user of the terminal 4 performs a predetermined operation according to the configuration of the terminal 4 such as positioning a mouse pointer on the cooking method list display link 1103 and clicking a mouse button, or touching a region where the cooking method list display link 1103 is displayed on the touch panel to display a cooking method list on the terminal display unit 44 of the terminal 4.

The cooking method list display link 1103 may be anything as long as the predetermined operation by the user with respect to a display region is accepted and the cooking method list is displayed, and may be displayed, for example, in a button form. Similarly, the element described as "button" in the embodiment of the specification may be realized in a format other than the button, for example, hyperlink.

The food material list display link 1104 is the same as the cooking method list display link 1103 except that the category of the target term is "food material".

The cooking method modifier addition screen display link 1105 is a link for displaying a screen for adding a modifier to the term selected as the cooking method. In a case where the user of the terminal 4 performs the predetermined operation with respect to the display region of the cooking method modifier addition screen display link 1105, the screen for adding the modifier of the cooking method is displayed on the terminal display unit 44.

The food material modifier addition screen display link 1106 is the same as the cooking method modifier addition screen display link 1105 except that the category of the target term is "food material".

The category addition link 1107 is a link for additionally displaying on the term input screen 1100 an input box, a list display link, and a modifier addition screen display link corresponding to a category other than the categories corresponding to the input boxes, the list display links, and the modifier addition screen display links displayed on the term input screen 1100.

In the term input screen 1100, the input boxes, the list display links, and the modifier addition screen display links corresponding to the categories "cooking method" and "food material" are displayed. In a case where the term belonging to, for example, the category "seasoning" other than the categories "cooking method" and "food material" is included in the name of the dish to be translated, when the user of the terminal 4 performs the predetermined operation with respect to the category addition link 1107, the terminal 4 additionally displays the input box, the list display link, and the modifier addition screen display link corresponding to "seasoning" on the term input screen 1100.

The input box, the list display link, and the modifier addition screen display link to be displayed by the operation with respect to the category addition link 1107 are the same as the cooking method input box 1101, the cooking method list display link 1103, and the cooking method modifier addition screen display link 1105 except that the target category is different.

The input content deciding button 1108 is a button for deciding the selection of the terms with the terms input to the input boxes included in the term input screen 1100. In a case where the user of the terminal 4 performs the predetermined operation with respect to the input content deciding button 1108, the terms input to the input boxes are transmitted to the server 2 as the selected terms.

FIG. 12 (a) is a diagram showing an example of a term selection list corresponding to the cooking method, and FIG. 12 (b) is a diagram showing an example of a term selection list corresponding to the food material.

In a case where the user of the terminal 4 performs the predetermined operation with respect to the cooking method list display link 1103 of the term input screen 1100 shown in FIG. 11, a cooking method list 1201 is displayed on the terminal display unit 44 based on the data transmitted from the server 2 to the terminal 4. The cooking method list 1201 shows a state where the terms " 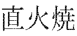 ", " 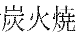 ", " 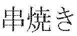 ", " 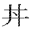 ", and the like belonging to the category "cooking method" are displayed and the term " 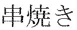 " is selected.

The user of the terminal 4 performs a predetermined operation according to the configuration of the terminal 4 such as positioning the mouse pointer on " 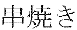 " and double-clicking the mouse button, or tapping a region where " 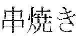 " is displayed on the touch panel to decide to select " 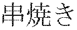 " in the list and to reflect on the term input screen 1100.

In this manner, the user of the terminal 4 can select the term belonging to the category "cooking method" in Japanese by the cooking method list 1201 to be displayed based on the data transmitted from the server 2 to the terminal 4.

The selection data for displaying the cooking method list 1201 for allowing the user to select the cooking method is transmitted from the server 2 to the terminal 4 together with the data for displaying the term input screen 1100. Further, the data may be transmitted from the server 2 to the terminal 4 in response to the signal transmitted from the terminal 4 to the server 2 by the predetermined operation with respect to the cooking method list display link 1103 by the user of the terminal 4.

The display based on the selection data for allowing the user to select the cooking method is not limited to a list form in which the terms to be selected are displayed as a list as shown in the cooking method list 1201. The display may be, for example, in a drop-down list form that expands the list in response to the operation by the user.

In a case where the user of the terminal 4 performs the predetermined operation with respect to the food material list display link 1104 of the term input screen 1100 shown in FIG. 11, a food material list 1202 is displayed. The food material list 1202 shows a state where the terms " 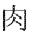 ", " 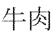 ", " 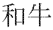 ", " 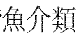 ", " 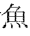 ", and " 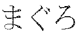 " belonging to the category "food material" are displayed and " 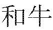 " is selected.

The transmission of the data for displaying the food material list 1202, the display form of the food material list 1202, the decision of the selection of the term in the food material list 1202, and the reflection on the term input screen 1100 are the same as the cooking method list 1201.

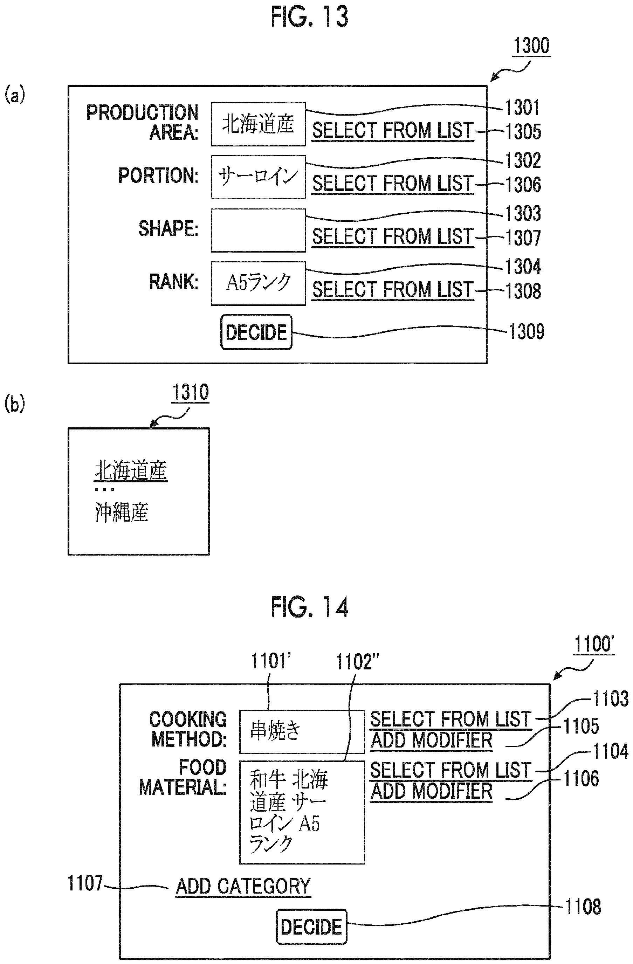

FIG. 13 (a) is a diagram showing an example of a food material modifier input screen, and FIG. 13 (b) is a diagram showing an example of a food material modifier selection list corresponding to the production area.

In a case where the user of the terminal 4 performs the predetermined operation with respect to the food material modifier addition screen display link 1106 of the term input screen 1100 shown in FIG. 11, a food material modifier addition screen 1300 is displayed on the terminal display unit 44 of the terminal 4. The food material modifier addition screen 1300 includes a production area input box 1301, a portion input box 1302, a shape input box 1303, a rank input box 1304, a production area list display link 1305, a portion list display link 1306, a shape list display link 1307, a rank list display link 1308, and a food material modifier deciding button 1309.

The input boxes 1301 to 1304 respectively corresponding to the production area, the portion, the shape, and the rank are regions for inputting the food material modifiers belonging to each of the categories.

The list display links 1305 to 1308 respectively corresponding to the production area, the portion, the shape, and the rank are links for displaying a list of the food material modifiers belonging to each of the categories. In a case where the user of the terminal 4 performs the predetermined operation with respect to the list display links 1305 to 1308, the list corresponding to the link is displayed.

In a case where the user of the terminal 4 performs the predetermined operation with respect to the production area list display link 1305 of the food material modifier addition screen 1300 shown in FIG. 13 (a), a production area list 1310 is displayed on the terminal display unit 44 of the terminal 4. The production area list 1310 shown in FIG. 13 (b) shows a state where " 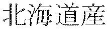 " among the terms " 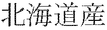 ", " 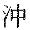 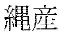 ", and the like belonging to the category "production area" is selected.

The list to be displayed at this time may display only a modifier that includes a term to be modified in the application range to prohibit the selection of a modifier that cannot be selected together with the term. It is possible to prevent an inappropriate term from being selected by displaying the list in this manner. Further, since the modifier that cannot be selected is not displayed and only the modifier that can be selected is displayed with such list, it is possible for the user to more easily select the term.

For example, it is considered that a modifier is added to the term " 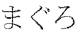 " input in the food material input box 1102 of the term input screen 1100 shown in FIG. 11. In a case where the user of the terminal 4 performs the predetermined operation with respect to the food material modifier addition screen display link 1106 in the state where the term " 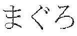 " is input in the food material input box 1102, the food material modifier input screen corresponding to the term " 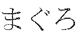 " is displayed on the terminal display unit 44 of the terminal 4. A portion list to be displayed in a case where the user of the terminal 4 performs the predetermined operation with respect to the portion list display link on the food material modifier input screen displays only a portion that includes the term " 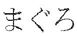 " in the application range.

Specifically, in the example of the first master shown in FIG. 7, the application range of the portion " 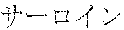 " is "IDM001" and does not include an ID of " 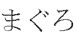 " or IDs of " 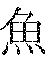 " and " 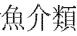 " which are the upper-level terms. The portion " 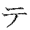 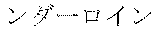 " is the same as the above. On the other hand, the application range of the portion " 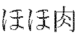 " is "IDM001 and IDM008" and includes the ID "IDM008"of " 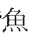 " which is the upper-level term of " 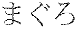 ". Accordingly, the portion list does not include " 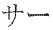 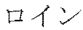 " and " 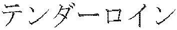 ", and includes " 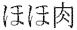 ".

The food material modifier deciding button 1309 in FIG. 13 (a) is a button that decides the selection of the food material modifiers input in the input boxes 1301 to 1304. In a case where the user of the terminal 4 performs the predetermined operation with respect to the food material modifier deciding button 1309, the food material modifiers input in the input boxes 1301 to 1304 are settled as the selected terms. The settled terms may be transmitted from the terminal 4 to the server 2 or may be stored in the terminal memory unit 42 of the terminal 4.

FIG. 14 is a diagram showing an example of the term input screen after the term selection.

In a case where the selection of the food material modifiers is decided by the food material modifier deciding button 1309 of the food material modifier addition screen 1300 shown in FIG. 13 (a), a term input screen 1100' is displayed on the terminal display unit 44. The term input screen 1100' after the term selection differs from the term input screen 1100 shown in FIG. 11 in that the selected terms are displayed in a cooking method input box 1101' and a food material input box 1102', and other elements are the same as the term input screen 1100. Accordingly, a description of the same element is omitted.

In the term input screen 1100', the term " 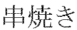 " selected in the cooking method list 1201 shown in FIG. 12 (a) is input in the cooking method input box 1101'. Further, the term " 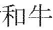 " selected in the food material list 1202 shown in FIG. 12 (b) and the terms " 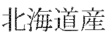 ", " 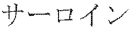 ", and "A 5 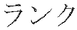 " selected in the food material modifier addition screen 1300 shown in FIG. 13 (a) are input in the food material input box 1102'.

In the term input screen 1100', in a case where the user of the terminal 4 performs the predetermined operation with respect to the input content deciding button 1108, the terms " 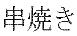 ", " 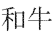 ", " 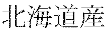 ", " 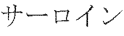 ", and "A 5 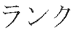 " input in the input boxes are transmitted to the server 2 as the selected terms.

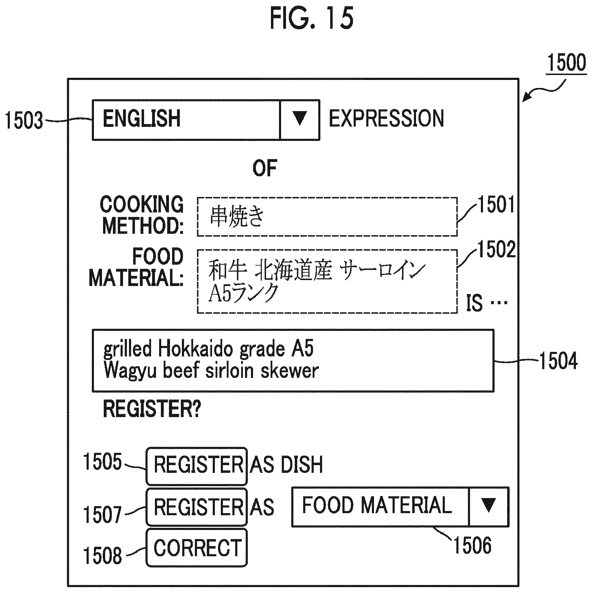

FIG. 15 is a diagram showing an example of a generated term display screen.

In a case where the terms selected by the input content deciding button 1108 of the term input screen 1100' shown in FIG. 14 are transmitted to the server 2 and the terminal 4 receives an English expression generated by the server 2, a generated term display screen 1500 is displayed on the terminal display unit 44. The generated term display screen 1500 includes a selected cooking method display field 1501, a selected food material display field 1502, a language selection drop-down list 1503, a generated term display field 1504, a dish registration button 1505, a category selection drop-down list 1506, a selected category registration button 1507, and a correction button 1508.

The selected cooking method display field 1501 is a region for displaying the expression in Japanese of the term belonging to the category "cooking method" selected as the term included in the name of the dish in FIG. 14. The selected cooking method display field 1501 displays content corresponding to display content of the cooking method input box 1101' in FIG. 14. In the example in FIG. 15, the selected cooking method display field 1501 displays " 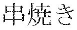 ".

The selected food material display field 1502 is a region for displaying the expression in Japanese of the term belonging to the category "food material" selected as the term included in the name of the dish. The selected food material display field 1502 displays content corresponding to display content of the food material input box 1102' in FIG. 14. In the example in FIG. 15, the selected food material display field 1502 displays " 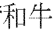 ", and " 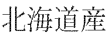 ", " 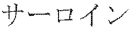 "and "A 5 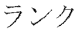 " selected as the food material modifiers.

In a case where a category is added by the category addition link 1107 shown in FIG. 11, a display field of a selected term belonging to the added category is displayed on the generated term display screen 1500 similarly to the selected cooking method display field 1501 and the selected food material display field 1502.

The language selection drop-down list 1503 is a list that selects a type of foreign language to express for the selected terms to be displayed in the selected cooking method display field 1501 and the selected food material display field 1502.

A list of selectable languages as an expression language of the terms, for example, "English", "Chinese (Simplified Chinese)", and the like is displayed in a region on the left side of the language selection drop-down list 1503 in response to a predetermined operation by the user on a region where "▼" on the right side of the language selection drop-down list 1503 is displayed. In the example in FIG. 15, English is selected as the expression language.

In the embodiment, the example of generating the English expression is described, but an expression in a language other than English can be generated by changing the expression language with the language selection drop-down list 1503. Further, a default language may be set in advance used in a case where the user does not explicitly select the expression language with the language selection drop-down list 1503. The default language is stored in the server memory unit 22 of the server 2 or the terminal memory unit 42 of the terminal 4.

The generated term display field 1504 is a region for displaying an expression in English of the name generated by the server 2. In the example in FIG. 15, "grilled Hokkaido grade A5 Wagyu beef sirloin skewer" is displayed.

The dish registration button 1505 is a button that registers the expression displayed in the generated term display field 1504 as the name of the dish. In a case where the user of the terminal 4 performs the predetermined operation with respect to the dish registration button 1505, the expression displayed in the generated term display field 1504 is registered as the English expression of the name of the dish. The registered English expression is stored in the server memory unit 22 of the server 2 or the terminal memory unit 42 of the terminal 4. At this time, an expression other than English selected as a display language may also be stored.

The category selection drop-down list 1506 is a list that selects a category in which the expression displayed in the generated term display field 1504 is registered. The selected category registration button 1507 is a button that registers the expression displayed in the generated term display field 1504 as the term of the category selected by the category selection drop-down list 1506.

A list of selectable categories as a storage destination category of the expression displayed in the generated term display field 1504, for example, "food material", "seasoning", "topping", and the like is displayed in a region on the left side of the category selection drop-down list 1506 in response to a predetermined operation by the user on a region where "▼" on the right side of the category selection drop-down list 1506 is displayed. In FIG. 15, the category selection drop-down list 1506 shows a state where the user selects the category "food material" as a desired category and the list display is returned to a single item display.

The selected category registration button 1507 is a button that registers the expression displayed in the generated term display field 1504 in a category selected by the category selection drop-down list 1506. The expression displayed in the generated term display field 1504 is registered in the category selected by the category selection drop-down list 1506 in response to a predetermined operation by the user with respect to the selected category registration button 1507.

In this manner, in the case where the generated expression is newly stored as a term belonging to a predetermined category, the term can be selected as a term included in another name. Therefore, the information providing system 1 can generate an expression in the second language corresponding to a more complicated name.

The correction button 1508 is a button for correcting the expression displayed in the generated term display field 1504. In a case where the user of the terminal 4 performs the predetermined operation with respect to the correction button 1508, it is possible to correct the expression displayed in the generated term display field 1504.

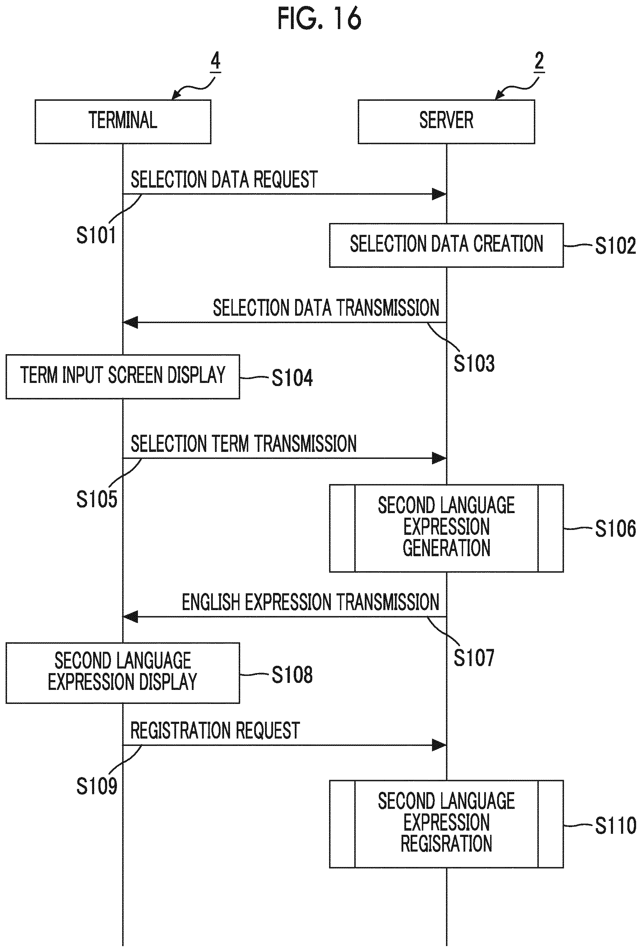

FIG. 16 is an operation sequence diagram of the information providing system 1.

The information providing system 1 cooperates with each of the elements of the server 2 and the terminal 4 mainly by the server processing unit 23 and the terminal processing unit 45 based on the programs stored in the server memory unit 22 and the terminal memory unit 42 in advance to execute this operation sequence.

First, the terminal transmission unit 452 of the terminal 4 transmits a request of the selection data for selecting the terms included in the name to be translated to the server 2 through the terminal communication unit 41 in response to the operation of the terminal operation unit 43 by the user (step S101).

Next, in a case where the receiving unit 232 of the server 2 receives the request of the selection data from the terminal 4 through the server communication unit 21, the selection data transmission unit 231 creates the selection data for displaying the term input screen 1100 with reference to the first master stored in the storage apparatus 3 (step S102).

The selection data transmission unit 231 reads the expression in the first language of each term stored in the first master corresponding to the cooking method and creates selection data for displaying the cooking method list 1201 in which the expression in the first language of each term is disposed in a selectable manner. Further, the selection data transmission unit 231 reads the expression in the first language of each term stored in the first master corresponding to the food material and creates selection data for displaying the food material list 1202 in which the expression in the first language of each term is disposed in a selectable manner. The selection data transmission unit 231 creates data for displaying the term input screen 1100 including the selection data for displaying the cooking method list 1201 and the selection data for displaying the food material list 1202.

In step S102, the selection data transmission unit 231 may create the selection data so as to prohibit the selection of a term other than the terms selectable together with the selected terms and transmit the selection data. The selection data transmission unit 231 can prohibit the selection of the term other than the terms selectable together with the selected terms by creating the selection data based on the application range associated with each term in the first master. The selection data transmission unit 231 can prohibit the selection of a predetermined term, for example, by creating the selection data such that the predetermined term is not displayed in a term list to be displayed in the terminal 4.

Next, the selection data transmission unit 231 of the server 2 transmits the selection data to the terminal 4 through the server communication unit 21 (step S103).

Next, in a case where the selection data is received from the server 2 through the terminal communication unit 41, the browsing execution unit 451 of the terminal 4 displays the term input screen 1100 on the terminal display unit 44 based on the received selection data (step S104).

Next, the browsing execution unit 451 of the terminal 4 transmits the term selected by the user operating the terminal operation unit 43 on the term input screen 1100 displayed on the terminal display unit 44 to the server 2 through the terminal communication unit 41 (step S105). In a case where a modifier that modifies another selected term is included in the selected term, the browsing execution unit 451 transmits the modifier and the term modified by the modifier in association with each other to the server 2. The receiving unit 232 of the server 2 receives the term belonging to the selected key category and the term belonging to other than the key category from the terminal 4.

Next, the expression generation unit 234 of the server 2 generates an expression in the second language (hereinafter, referred to as "second language expression") of the name including the selected terms (step S106). The generated second language expression is stored in a temporary memory region of the server memory unit 22. Detail of generation processing of the second language expression in the server 2 will be described below.

Next, the expression transmission unit 235 transmits data for displaying the generated term display screen 1500 including the second language expression to the terminal 4 through the server communication unit 21 (step S107).

Next, in a case where the data including the second language expression is received from the server 2 through the terminal communication unit 41, the browsing execution unit 451 of the terminal 4 displays the generated term display screen 1500 on the terminal display unit 44 based on the received data (step S108).

Next, the browsing execution unit 451 transmits a registration request that requests the registration of the second language expression to the first master to the server 2 through the terminal communication unit 41 based on the operation on the terminal operation unit 43 by the user on the generated term display screen 1500 displayed on the terminal display unit 44 (step S109). In step S109, the browsing execution unit 451 designates the first master which is a registration destination of the second language expression. In the example in FIG. 15, the first master corresponding to the category "food material" selected in the category selection drop-down list 1506 is designated as the registration destination of the second language expression based on the operation on the selected category registration button 1507. The server 2 may register the second language expression in the first master set in advance for a registration request in which the registration destination is not explicitly designated.

In a case where the registration request is received through the server communication unit 21, the server 2 newly stores the second language expression stored in the temporary memory region of the server memory unit 22 in the first master corresponding to a category designated by the registration request as the term belonging to the category according to the instruction of the user of the terminal 4 (step S110). Detail of registration processing of the second language expression in the server 2 will be described below.

Thus, the operation sequence of the information providing system 1 ends.

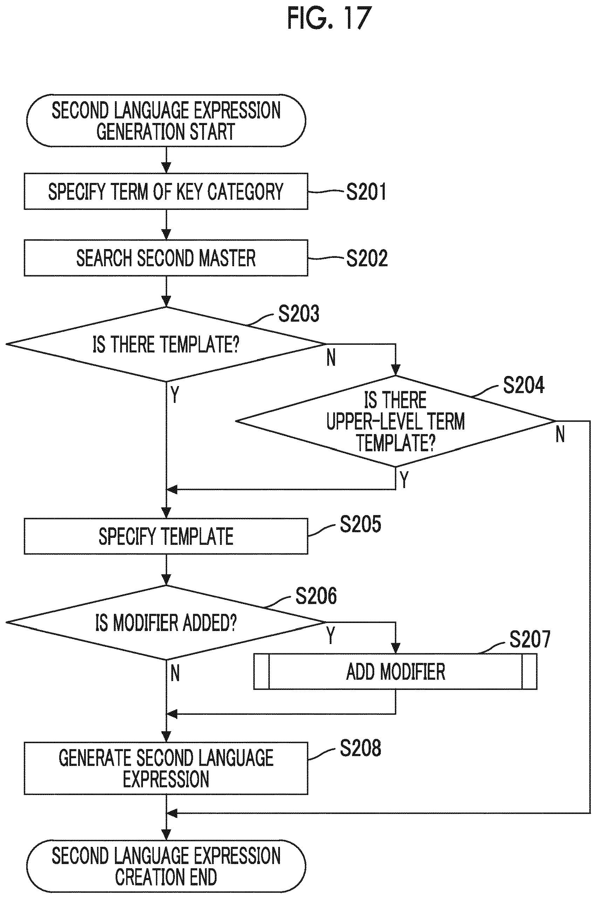

FIG. 17 is a flowchart of second language expression generation processing.

The flowchart shown in FIG. 17 is executed in step S106 shown in FIG. 16.

First, the template specification unit 233 specifies the terms belonging to the key category from the terms selected as the terms included in the name of the menu received through the server communication unit 21 (step S201). A category which is the key category is stored in advance in the server memory unit 22. The template specification unit 233 may search the second master with each of the selected terms and specify the terms stored in the second master as the terms belonging to the key category.

Next, the template specification unit 233 searches the term belonging to the key category (hereinafter, referred to as "selected key term") among the selected terms from the second master (step S202). In a case where the term shown in the term input screen 1100' in FIG. 14 is selected, the template specification unit 233 searches the term " 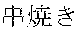 " belonging to "cooking method" which is the key category from the second master.

Next, the template specification unit 233 determines whether the template is associated with the selected key term in the second master (step S203). In the case where the term shown in the term input screen 1100' in FIG. 14 is selected, the template specification unit 233 determines whether the template is associated with the term " 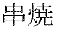 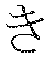 " in the second master.

In the second master, in a case where the template is associated with the selected key term (step S203-Y), the template specification unit 233 specifies the template associated with the term belonging to the key category among the selected terms (step S205). At this time, the template specification unit 233 specifies all the templates for language associated with the term in the second master. The template specification unit 233 may specify only the template of the default language described above. In the case where the term shown in the term input screen 1100' in FIG. 14 is selected, the template specification unit 233 specifies the template "grilled [food material] skewer" associated with the term " 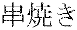 " in the second master.

In the second master, in a case where the template is not associated with the selected key term (step S203-N), the template specification unit 233 determines whether the template is associated with the upper-level term associated with the selected term (hereinafter, referred to as "selected upper-level term") in the second master (step S204).

In the second master, in a case where the template is associated with the selected upper-level term (step S204-Y), the template specification unit 233 specifies the template associated with the selected upper-level term as the template associated with the selected term (step S205).

In a case where the term " 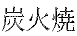 " is a term belonging to the key category among the selected terms, the template is not associated with the term " 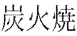 " in the second master shown in FIG. 8. On the other hand, the parent ID "J001" is associated with the term " 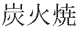 ", and the term " 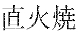 " corresponding to the ID "J001" is the upper-level term of the term " 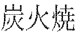 ". Since the template is associated with the term " 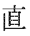 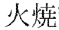 ", a template "[English expression] [food material]" associated with the upper-level term " 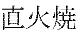 " is specified as the template corresponding to the selected term " 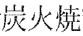 ".

In a case where the operation is performed in this manner, there is no need to create the template for a lower-level term common to a word order. Therefore, it is possible to reduce work of a server administrator and a memory capacity of the storage apparatus 3 necessary for storing the second master.

In the second master, in a case where the template is not associated with the selected upper-level term (step S204-N), the second language expression generation processing ends. In this case, the template specification unit 233 may notify the terminal 4 of an error code representing an abnormal end.

Next, the expression generation unit 234 determines whether the modifier is added to the selected term (step S206). The expression generation unit 234 determines whether the modifier is added to the selected term by determining whether the modifier and the term modified by the modifier are transmitted from the terminal 4 in association with each other.

Further, the expression generation unit 234 may determine whether the modifier is added to the selected term by determining whether the term of the category corresponding to the modifier is included in the selected term. A category which is the category corresponding to the modifier may be stored in advance in the server memory unit 22.

In a case where the modifier is added to the selected term (step S206-Y), the expression generation unit 234 executes modifier addition processing (step S207). Detail of the modifier addition processing will be described below.

In a case where the modifier is not added to the selected term (step S206-N) or in a case where the modifier addition processing (step S207) ends, the expression generation unit 234 arranges the second language expression of the selected terms in the arrangement order defined by the specified template to generate the second language expression of the menu (step S208). The expression generation unit 234 searches the selected terms from the first masters corresponding to the categories belonging to the selected terms and reads the second language expression associated with the searched terms to acquire the second language expression of the selected terms.

In FIG. 1, in a case where the terms " 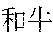 " and " 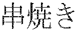 " included in a menu " 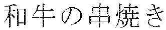 " are selected and the modifier is not added, the expression generation unit 234 arranges English expressions of the selected terms in the arrangement order defined by "grilled [food material] skewer" specified by an English template. That is, the expression generation unit 234 disposes an English expression "Wagyu beef' of the term " 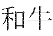 " belonging to the category "food material" acquired from the first master at a position of "[food material]" of the English template to generate an English expression "grilled Wagyu beef skewer" of " 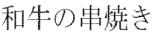 ".

Further, in a case where the terms " 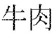 " and " 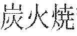 " included in a menu " 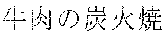 " are selected and the modifier is not added, the expression generation unit 234 arranges English expressions of the selected terms in the arrangement order defined by "[English expression] [food material]" specified by an English template. In the "[English expression] [food material]", "[English expression]" indicates an English expression of a term selected as the cooking method. Therefore, the English expression of the terms " 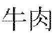 " and " 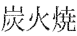 " is "char-broiled beef' obtained by arranging an English expression "beef' of " 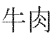 " and an English expression "char-broiled" of " 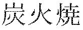 " acquired be referring to the first masters in the arrangement order defined by the template.

Thus, second language expression creation processing ends.

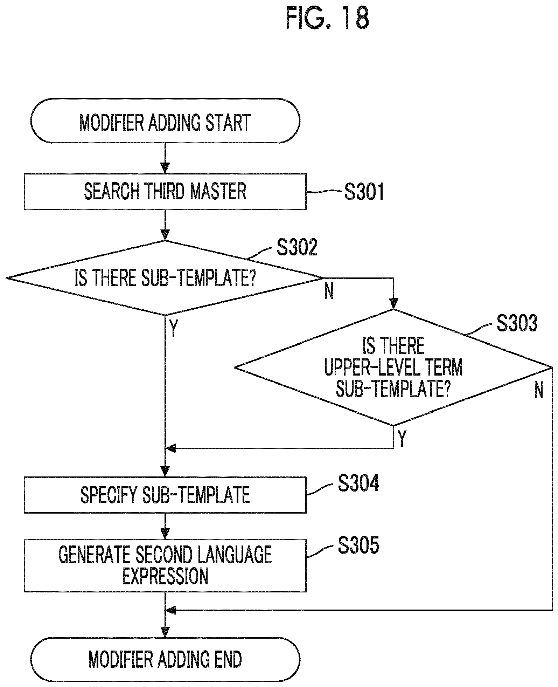

FIG. 18 is a flowchart of the modifier addition processing.

The flowchart shown in FIG. 18 is executed in step S207 shown in FIG. 17.

First, the expression generation unit 234 searches a term to which the modifier is added (hereinafter, referred to as "modified selected term") from the third master (step S301). In the case where the term shown in the term input screen 1100' in FIG. 14 is selected, the expression generation unit 234 searches the term " 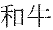 " to which the modifiers " 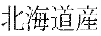 ", " 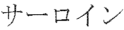 ", and "A 5 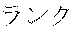 " are added from the third master.

Next, the expression generation unit 234 determines whether the sub-template is associated with the modified selected term in the third master (step S302). In the case where the term shown in the term input screen 1100' in FIG. 14 is selected, the expression generation unit 234 determines whether the sub-template is associated with the modified selected term " 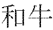 " in the third master.

In the third master, in a case where the sub-template is associated with the modified selected term (step S302-Y), the expression generation unit 234 specifies the sub-template associated with the modified selected term (step S304). At this time, the expression generation unit 234 specifies all the sub-templates for language associated with the modified selected term in the third master. The expression generation unit 234 may specify only the sub-template of the default language described above. In the case where the term shown in the term input screen 1100' in FIG. 14 is selected, the expression generation unit 234 specifies the sub-template "[shape] [production area] [rank] Wagyu beef [portion]" associated with the modified selected term " 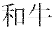 " in the third master.

In the third master, in a case where the sub-template is not associated with the modified selected term (step S302-N), the expression generation unit 234 determines whether the sub-template is associated with the upper-level term of the modified selected term in the third master (step S303).

In the third master, in a case where the sub-template is associated with the upper-level term of the modified selected term (step S303-Y), the expression generation unit 234 specifies the sub-template associated with the upper-level term of the modified selected term (step S304).

In the third master, in a case where the sub-template is not associated with the upper-level term of the modified selected term (step S303-N), the modifier addition processing ends. At this time, the expression generation unit 234 may notify the terminal 4 of an error code representing the abnormal end.

Following step S304, the expression generation unit 234 arranges the second language expression of the selected terms in the arrangement order defined by the specified sub-template to generate the second language expression of the modified selected term (step S305). The expression generation unit 234 searches the selected terms from the first masters corresponding to the categories belonging to the selected terms and reads the second language expression associated with the searched terms to acquire the second language expression of the selected terms.

In the case where the term shown in the term input screen 1100' in FIG. 14 is selected, the expression generation unit 234, the expression generation unit 234 arranges English expressions of the selected terms in the arrangement order defined by "[shape] [production area] [rank] Wagyu beef [portion]" specified as an English sub-template for the term " 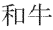 " to which the terms " 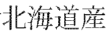 ", " 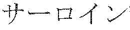 ", and "A 5 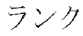 " are added. That is, the expression generation unit 234 disposes each of English expressions "Hokkaido", "sirloin", and "grade A5" of the term " 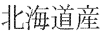 " of the category "production area", the term " 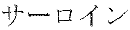 " of the category "portion", and the term "A 5 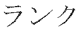 " of the category "rank" acquired from the first master at a position of each category of the English sub-template to generate an English expression "Hokkaido grade A5 Wagyu beef sirloin".

Thus, the modifier addition processing by the information providing system 1 ends.

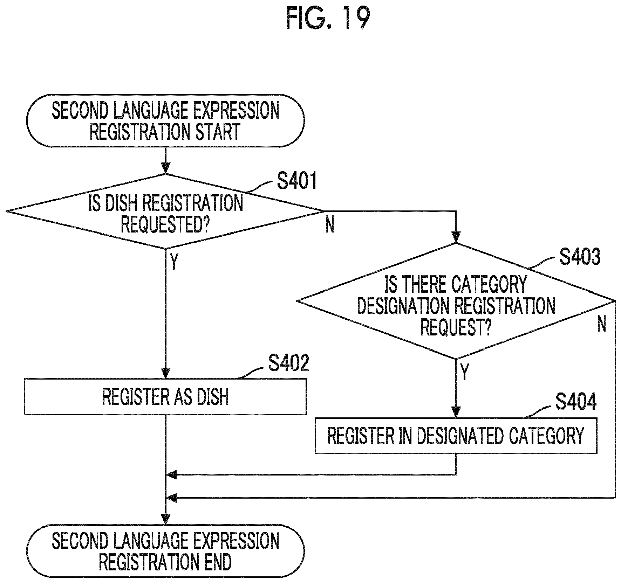

FIG. 19 is a flowchart of second language expression registration processing.

The flowchart shown in FIG. 19 is executed in step S110 shown in FIG. 16.

First, the expression memory unit 236 determines whether the registration as the dish is requested from the terminal 4 (step S401). Specifically, the expression memory unit 236 determines whether the first master designated by the registration request transmitted by the terminal 4 in step S109 is the first master corresponding to a category "dish".

In a case where it is determined that the registration as the dish is requested (step S401-Y), the expression memory unit 236 registers the second language expression generated in step S106 (step S402). The expression memory unit 236 stores the generated English expression as a new item in the first master corresponding to the category "dish". The expression memory unit 236 generates an ID that becomes unique in the first master to be registered and stores the ID in association with the generated English expression. The expression memory unit 236 may also store the expression in a language other than English.

In a case where it is determined that the registration as the dish is not requested (step S401-N), the expression memory unit 236 determines whether the registration designating the category is requested from the terminal 4 (step S403). Specifically, the expression memory unit 236 determines whether the first master corresponding to the category other than "dish" is designated in the registration request transmitted by the terminal 4 in step S109.

In a case where it is determined that the registration designating the category is requested (step S403-Y), the expression memory unit 236 registers the second language expression generated in step S106 as the term of the designated category (step S404). The expression memory unit 236 generates an ID that becomes unique in the first master to be registered and stores the ID in association with the generated English expression. The expression memory unit 236 may also store the expression in a language other than English. As shown in FIG. 15, in the case where the category "food material" is selected in the category selection drop-down list 1506, the expression memory unit 236 stores the generated English expression as a new item in the first master corresponding to the category "dish".

In the registration as the dish in step S402 or in the registration as the term of a designated category in step S404, the expression memory unit 236 registers the second language expression generated with respect to the first master commonly used by the information providing system 1.

In a case where the first master to the third master are stored in the storage apparatus 3 for each terminal 4 or for each user of the terminal 4, the expression memory unit 236 may register the second language expression generated with respect to the first master used for each terminal 4 or for each user of the terminal 4. In this manner, it is possible to register the second language expression corresponding to a menu unique to the restaurant in which the terminal 4 is installed without affecting the term list to be displayed by referring to the first master at another restaurant using the information providing system 1.

In a case where it is determined that the registration designating the category is not requested (step S403-N), the second language expression registration processing ends. At this time, the expression memory unit 236 may notify the terminal 4 of an error code representing the abnormal end.

As described above in detail, since the information providing system 1 arranges the expressions in the foreign language in the arrangement order defined by the template associated with the term belonging to the key category to generate the expression in the foreign language, it is possible to generate the menu name in the foreign language in an appropriate word order.

Since the arrangement order of the terms of the foreign language menu name generated in this manner is defined for each term belonging to the key category.

Further, since such information providing system 1 may not define the arrangement order for a combination of all the terms and may define the arrangement order of the categories for the terms belonging to the key category, the data creation for service provision becomes simple.

The information providing system 1 may implement a part of the embodiment described above in a modified manner.

For example, since the English expression displayed on the terminal 4 in step S108 can also be stored by the terminal 4, the server 2 may not have the expression memory unit 236. In this case, the registration request of the English expression (step S109) and the registration of the English expression (step S110) are not executed. With such configuration, it is possible to display the generated English expression even in a case where the terminal 4 is not connected to the server 2.

Further, the Japanese expression as the first language, the English expression as the second language, and the Chinese (Simplified Chinese) expression as the third language are associated with the first master to the third master stored in the storage apparatus 3 of the information providing system 1. However, a combination of the languages is not limited to the above, and the expressions in more languages may be associated with the masters. Furthermore, in a case where only the first language and the second language are associated, it is possible to achieve the purpose of the present disclosure by generating the expression in the second language corresponding to the name of the first language.

Further, the embodiment in which the key category is the cooking method and the category other than the key category is the food material or the seasoning is described in the information providing system 1. Such information providing system 1 is suitable for providing the translation of the menu for the restaurant that desires to acquire a foreign language expression of a dish menu.

However, it is possible to apply the embodiment to the term belonging to the category other than the category of the cooking method or the like.

Those skilled in the art should be understood that various changes, substitutions, and modifications can be added thereto without departing from the spirit and scope of the invention.

### Explanation of References

1: information providing system
2: server
231: selection data transmission unit
232: receiving unit
233: template specification unit
234: expression generation unit
235: expression transmission unit
3: storage apparatus
4: terminal
5: network

## Claims

1. A control method of a server connectable to a memory unit and a terminal,
wherein the memory unit stores a first master that associates an expression in a first language with an expression in a second language of each of a plurality of terms belonging to each category for each of a plurality of categories, and a second master that associates a plurality of terms belonging to a key category among the plurality of categories with a template that defines an arrangement order of the terms respectively belonging to each of the categories included in a name including each term in a case where the name is expressed in the second language,
the method comprising:
transmitting selection data for allowing a user of the terminal to select the terms belonging to the key category included in the name and the terms belonging to the categories other than the key category in the first language to the terminal by the server;
receiving the selected terms belonging to the key category and the terms belonging to the categories other than the key category from the terminal by the server;
specifying the template associated with the selected terms belonging to the key category in the second master by the server;
arranging expressions in the second language of the selected terms to be acquired from the first master in an arrangement order defined by the specified template to generate an expression in the second language of the name by the server; and
transmitting the expression in the second language of the generated name to the terminal by the server.

2. The control method according to claim 1,
wherein the first master further associates the expression in the first language with an expression in a third language of each of the plurality of terms belonging to each of the categories, and
wherein the second master further associates each of the plurality of terms belonging to the key category with the template in the third language.

3. The control method according to claim 1 or 2,
wherein the expression in the second language of the generated name is newly stored in the first master as the term belonging to any one of the categories according to an instruction of the user.

4. The control method according to any one of claims 1 to 3,
wherein the memory unit further stores a third master that associates each of the terms belonging to the categories other than the key category among the plurality of categories with a sub-template that defines an arrangement order of the terms respectively belonging to each of the categories included in a part name in a case where the part name including each of the terms is expressed in the second language, and
wherein the server specifies the sub-template associated with the selected terms belonging to the categories other than the key category in the third master in the specification and arranges expressions in the second language of terms defined by the sub-template among the selected terms in the arrangement order defined by the specified sub-template.

5. The control method according to any one of claims 1 to 4,
wherein an upper-level term is associated with the specified term in the second master, and
wherein in a case where the template is not associated with the selected terms in the specification, the template associated with the upper-level terms associated with the selected terms is specified as the template associated with the selected terms.

6. The control method according to any one of claims 1 to 5,
wherein a term belonging to another category selectable together with each of the terms for each of the terms is associated in the first master or the second master, and
wherein the server prohibits selection of a term other than the term selectable together with the selected terms in the selection data.

7. The control method according to any one of claims 1 to 6,
wherein the key category is a cooking method and the category other than the key category is a food material or a seasoning.

8. A server connectable to a memory unit and a terminal,
wherein the memory unit stores a first master that associates an expression in a first language with an expression in a second language of each of a plurality of terms belonging to each category for each of a plurality of categories, and a second master that associates a plurality of terms belonging to a key category among the plurality of categories with a template that defines an arrangement order of the terms respectively belonging to each of the categories included in a name including each term in a case where the name is expressed in the second language,
the server comprising:
a selection data transmission unit that transmits selection data for allowing a user of the terminal to select the terms belonging to the key category and the terms belonging to the categories other than the key category in the first language to the terminal;
a receiving unit that receives the selected terms belonging to the key category and the terms belonging to the categories other than the key category from the terminal;
a template specification unit that specifies the template associated with the selected terms belonging to the key category in the second master;
an expression generation unit that arranges expressions in the second language of the selected terms to be acquired from the first master in an arrangement order defined by the specified template to generate an expression in the second language of the name including the selected terms; and
an expression transmission unit that transmits the expression in the second language of the generated name to the terminal.

9. A control program of a server connectable to a memory unit and a terminal wherein the memory unit stores a first master that associates an expression in a first language with an expression in a second language of each of a plurality of terms belonging to each category for each of a plurality of categories, and a second master that associates a plurality of terms belonging to a key category among the plurality of categories with a template that defines an arrangement order of the terms respectively belonging to each of the categories included in a name including each term in a case where the name is expressed in the second language, the program causing the server to:
transmit selection data for allowing a user of the terminal to select the terms belonging to the key category and the terms belonging to the categories other than the key category in the first language to the terminal;
receive the selected terms belonging to the key category and the terms belonging to the categories other than the key category from the terminal;
specify the template associated with the selected terms belonging to the key category in the second master;
arrange expressions in the second language of the selected terms to be acquired from the first master in an arrangement order defined by the specified template to generate an expression in the second language of the name including the selected terms; and
transmit the expression in the second language of the generated name to the terminal.
